# EUROPEAN PATENT APPLICATION

(11) **EP 4 811 842 A1**
(43) Date of publication of application: **23.09.2026**
(21) Application number: 25165097.4
(22) Date of filing: 20.03.2025
(51) Int. Cl.: H04W 12/30, H04W 12/40, H04W 8/18, H04W 8/20

(54) **METHOD, CONFIGURATION PROGRAM, SECURITY PROGRAM DATASET, COMPUTER-READABLE DATA CARRIER, HARDWARE SECURITY MODULE, AND SERVER DEVICE WITH PROFILE IDENTIFIER DATABASE**

(71) Applicant: Giesecke+Devrient Mobile Security Germany GmbH, 81677 München (DE)
(72) Inventor: Abdallah, Mohammad, 100 74 Stockholm (SE)
(74) Representative: LKGLOBAL Partnerschaftsgesellschaft mbB

(57) **Abstract**

A method, as well as a corresponding configuration program (10), a security program dataset (10c), a computer-readable data carrier (11, 12, 13), a hardware security module (4), and a server device (4) are provided, wherein providing user profile datasets (P) for configuring secure elements (6), such as eUICCs, of user devices (5) intended to be issued to users (U) and allowing secure accesses involving a trusted entity (T), in particular for accessing telecommunication networks, the method comprising the steps of providing a set of secure elements (6) each having an element identifier (D), configuring a profile identifier database (D) containing potential profile identifiers (I) each identifying a user profile dataset (P) to be associated with a user; and fetching an element identifier (X) of a secure element (6) for configuration, and selecting a profile identifier (I) from the profile identifier database (D) to be associated with the element identifier (X) based on at least one selection instruction taken from the profile identifier database (D).

## Description

### Technical Field

The present disclosure relates to the field of configuring user devices, for example, smart cards, transaction cards, personal mobile devices or Internet-of-Things (IoT) devices, or alike, for being securely operated by an authorized user, for instance for conducting secure transactions and/or participating in communication networks. In particular, the present disclosure relates to a method of providing user profile datasets for configuring secure elements, such as eUICCs, of user devices intended to be issued to users and allowing secure accesses involving a trusted entity, in particular for accessing telecommunication networks, a configuration program for configuring secure elements of user devices, in particular for secure operation involving a trusted entity, a security program dataset for a hardware security module of a server device, in particular a security server providing a secure location for allowing secure operations involving a trusted entity, a computer-readable data carrier, a hardware security module for a server device, in particular a security server providing a secure location or allowing secure operations involving a trusted entity, and a server device, such as a security server providing a secure location, in particular for al-lowing secure operations involving a trusted entity.

### Background of the Invention

User devices, such as smart cards (e.g., so-called java cards), identification cards, transaction cards, personal mobile devices or IoT-devices, are known from the prior art. The user devices are commonly configured to employ electronic subscriber profiles authenticating a user for secure transactions or communicating on telecommunication networks, e.g., mobile networks. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles that may allow the user devices to connect to one or more mobile networks. A subscriber profile (e.g., an eSIM profile) may be generated by a mobile network operator (MNO) and may be stored, e.g., downloaded to a mobile user device. The subscriber profile may then be installed on a secure element of the user device and used for communication over a corresponding mobile network by the user device.

The secure elements are run by operation systems (OS) containing software and/or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need for so-called firmware-upgrades and/or updates that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, such updates can be carried out with the help of an Open Firmware Loader (OFL), or alike, which is specifically designed software component in charge of firmware upgrades including OS updates in the secure element. The need to be able to update the software for certain SE/TRE has generated many different approaches worldwide. In some solutions, there is a separate entity (ITL - Image Trusted Loader, OFL, Update Agent) which is kept in charge in the SE/TRE while the full OS, or only part of it, is changed. The states of the SE/TRE are then not really defined according to any global entity.

WO 2023 274579 A1 relates to methods, apparatus, and systems for implementing an encryption scheme for providing a software image to a secure element. The software image is converted into a sequence of ciphered blocks, which is protected with an authentication tag to obtain a sequence of protected blocks, which are then transmitted to an update agent on the secure element. The steps of converting the software image into a sequence of ciphered blocks and protecting the sequence of ciphered blocks with an authentication tag are implemented by an authenticated encryption function using a same block cipher.

WO 2023 274578 A1 relates to a method, a data structure, and an update agent for implementing a scheme for downloading an operating system image onto a secure element. The update agent receives from an external device an installation package for installing an operating system onto the secure element. The update agent requests control of the secure element and loads the operating system received with the installation package into the secure element, after which control of the secure element is transferred to the operating system.

WO 2023 274577 A1 relates to a method, an update agent and an off-card entity for implementing an authentication scheme for providing a software image to a secure element. An installation package comprising a package binding function for linking the installation package to the secure element, a manifest, a manifest signature generated using a block-cipher algorithm, and a software image is received at an update agent within the secure element. The update agent implements an authentication and integrity scheme by verifying various signatures contained within the installation package and install the software image in case of successful authentication and integrity verification.

Furthermore, the subscriber profile, i.e. a structure and format thereof, as well as the respective diversified data, including security credentials, etc., should be adapted to the respective OS. According to the prior art, there are a number of ways of installing the subscriber profile on a SE/TRE, which may include providing the diversified and/or personalized data to the SE/TRE. In general, this can be done either via normal commands communicating with the OS or in other ways during production in factory, for example, by a so-called "Diversified Data Injection" referring to a deployment of different data for each TRE in factory before issuance of the SE/TRE to a customer.

WO 2022 214219 A1 relates to a method for personalizing a secure element, having the following steps: receiving, in a data generator, a request for a bundle of storage images for a plurality of secure elements, wherein each requested storage image of the received bundle relates to a secure element of the plurality of secure elements, and each secure element of the plurality of secure elements is securely installed in a corresponding terminal of a plurality of terminals; obtaining, in the data generator, at least one subscription data set for at least one securing element to be personalized of the plurality of secure elements, said subscription data set being obtained from a subscription managing server; providing, by means of the data generator, an operating system or a part of the operating system for the secure element to be personalized; generating, by means of the data generator, a storage image for each of the secure elements according to the received request, said storage image of the secure element to be personalized comprising the provided operating system or the part of the operating system and additionally the obtained at least one subscription data set; and bundling the generated storage image and providing the bundled storage image in the form of a storage image bundle by means of the data generator in order to complete the terminal, thereby introducing at least the storage image of the secure element to be personalized into the secure element in order to personalize the secure element.

EP 4 468 653 A1 describes a method for provisioning an xUICC, destined to host one or more profiles for communication in a mobile communication network, comprising the steps: Providing in the xUICC an OS load key, as a root of trust (RoT); Loading and installing to the xUICC an xUICC operating system, xUICC OS, encrypted with the OS load key for the loading, the xUICC OS being designed to enable directly or indirectly receiving and installing in the xUICC one or several eSIM profiles; Loading and storing to the xUICC xUICC unique data, encrypted with the OS load key for the loading, the xUICC unique data comprising at least one GSMA certificate, certifying the xUICC with the installed xUICC as certified for receiving and installing in the xUICC eSIM profiles; preparing the xUICC for a later downloading and installing of downloading and installing an eSIM profile, encrypted with the OS load key for the downloading, to the xUICC prepared with previous steps, wherein the xUICC operating system, xUICC, of step, the xUICC unique data of step, and the eSIM profiles of step are encrypted with the same OS load key provided in step.

EP 4 124 980 A1 relates to a method for personalizing a software, in particular an operating system OS, in a SE, comprising the steps of loading a software image into the memory of the SE; loading a software personalization record comprising personalization data into the memory of the SE; and personalizing the loaded software image using the software personalization data. Personalization of the software image is initiated by an internal agent of the SE. Preferably, initiation personalization of the software image by the internal agent is triggered by a trigger event that is detected by the internal agent, the trigger event being unrelated to software personalization.

EP 4 429 292 A1 refers to a method for generating at least one profile, for provisioning the profile to an eUICC designed to be hosted in a device, including the steps: Provide profile generation data, including static profile data for generating a profile container and dynamic; generate a profile, and a dynamic-data description file indicating content and storage location of at least the dynamic profile data in the profile; Create, in the eUICC at least one profile container, provide the profile and the dynamic-data description file to a Dynamic Converter, and at the Dynamic Converter, with support of the dynamic-data description file, extract the dynamic profile data from the profile, for later transferring the extracted dynamic profile data to the eUICC, and installing the transferred extracted dynamic profile data into the profile container previously created.

EP 4 124 979 A1, in a first aspect, relates to a method for updating an installed software, in particular an operating system, in a secure element. The method comprises the steps of providing an update agent in the secure element; securing specific data required for operating the installed software in a memory of the update agent; loading a software image into the secure element, the software image representing an update of the installed software; and making the software image operable by the secured specific data. According to further aspects, the present invention relates to a respective secure element, an update agent, and a computer-program product in relation to other aspects of the invention.

EP 4 124 976 A1 relates to an update agent, a secure element containing the update agent, and a method for loading and personalizing a software in the secure element. In a first step, an update agent is loaded into the secure element. In a further step, software personalization data is loaded into the secure element, and stored in the update agent. Subsequently, the software is loaded into the secure element and personalized using the software personalization data stored in the update agent.

Methods for configuring and upgrading/updating secure elements of user devices, involving OS updates and the provision of user profiles, including diversified and/or personalized data, as described above, may not fully satisfy all requirements regarding their deployability and availability on the one hand, as well as functional safety and security on the other hand. In particular the provision of diversified and/or personalized data, such as in "Diversified Data Injection" generally happens in factory during production and is generally blocked afterwards, such as after when the SE/TRE is issued to a customer. Many of the data diversified and/or personalized here cannot be provided via common commands after issuance for different reasons.

In general, it is desirable that both, the OS, and the secure elements have the same origin and preferably same state of development in order to ensure functional safety and security. However, due to deployability and availability restrictions, it may not be always assured that the OS, as well as the secure elements have the same origin, corresponding versions, or meet certain future requirements, especially if an implementation of a new specification or standard for operating the user devices is expected to be issued during lifetime of the user device and/or respective secure element. This may limit the functionality, especially a spectrum of (future) capabilities, of the user device, may compromise functional safety and security when operating user devices, or may even lead to that the devices cannot be configured properly, keeping in mind that not only the OS but also related data structures including diversified data can be affected by updating procedures.

Furthermore, when the provisioning of certain pieces of data, such as diversified data, is restricted to a very early phase of the production process, it places heavy restrictions on timelines and planning. This potentially complicates certain aspects of production, such as stock accumulation, especially if data requirements cannot be well defined in advance. Production may be further complicated when different parties are involved in the production process, for example, if one party produces the SE/TRE as well as respective personalized software images, and another party provides the OS, while a third one may be in charge of the diversified data. In such a case, special processes are required for data provisioning within each of the factories involved. Even though, such processes may be partially covered by in-factory personalization functionalities as known from the prior art, nevertheless, different provisioning methods for different factories and manufacturers may occur, which may in turn again compromise certain requirements regarding deployability and availability of SE/TRE on the one hand, as well as their functional safety and security on the other hand.

### Summary of the Invention

It may be thus seen as an object to provide a way to handle secure elements, their OS, user profile datasets and respective diversified data in a way that a future proof functional spectrum, safety and security may be assured, while not compromising deployability, availability, and/or data integrity. In particular, it may be seen as an object to facilitate providing user profile datasets to secure elements in a way, that on the one hand, their personalization can be carried out at remote premises or by third parties, while on the other hand, a required level of control by trusted entities and/or standardization bodies over the personalization process is maintained. These objects are at least partly achieved by the subject-matter of the independent claims.

According to an aspect, a method of providing user profile datasets for configuring secure elements, such as eUICCs, of user devices intended to be issued to users and allowing secure accesses involving a trusted entity, in particular for accessing telecommunication networks, the method comprising the steps of providing a set of secure elements each having an element identifier, configuring a profile identifier database containing potential profile identifiers each identifying a user profile dataset to be associated with a user; and fetching an element identifier of a secure element for configuration, and selecting a profile identifier from the profile identifier database to be associated with the element identifier based on at least one selection instruction taken from the user profile database.

According to an aspect, a configuration program for configuring a user device, in particular for secure operation involving a trusted entity, is provided, wherein the configuration program comprises instructions which, when the configuration program is executed by a server device, cause the server device to carry out a corresponding method.

According to an aspect, a security program dataset for a hardware security module of a server device, in particular a security server providing a secure location for allowing secure operations involving a trusted entity, is provided, the security program dataset comprising a at least parts of a corresponding configuration program and/or configured to carry out a corresponding method. An operating system dataset for a secure element of a user device, such as an eUICC, may be provided, the operating system dataset may comprise at least parts of a corresponding configuration program and/or may be configured to carry out a corresponding method and/or to interact with a respective configuration program and/or security program dataset.

According to an aspect, a computer-readable data carrier is provided, having stored thereon a corresponding configuration program according and/or a corresponding security program dataset.

According to an aspect, a hardware security module for a server device, in particular a security server providing a secure location for allowing secure operations involving a trusted entity, is provided, wherein the hardware security module is configured to carry out a corresponding method, comprises a corresponding configuration program, a corresponding security program dataset, and/or a corresponding computer-readable data carrier.

According to an aspect, a server device is provided, such as a security server providing a secure location, in particular for allowing secure remote operation of user devices involving a trusted entity, wherein the server device is configured to carry out a corresponding method, comprises a corresponding configuration program, a corresponding security program dataset a corresponding computer-readable data carrier, and/or a corresponding hardware security module.

The secure element may be understood as a tamper resistant element (TRE). A diversification program dataset may provide a and/or be provided as a diversified data manager (DDM) for managing the diversified data. Additionally, an installation program dataset can be provided for managing installation process, such as installing and/or updating an operating system dataset or respective update data subsets. The installation program dataset may implement an installation state machine which can be located in the installation program dataset and configured to provide information regarding a status of the installation process. Both, the diversification program dataset and the installation program dataset may be integrated as data subsets into a customization dataset, such as a firmware suite allowing for customization of data on the secure element.

A complete operating system update dataset and/or subsets thereof comprising at least one update data subset may be provided for at least partially replacing the previously installed operating system dataset. An application program dataset may be provided as a part of an operating system dataset of the secure element and/or may be configured to interact with the operating system dataset. A complete operating system dataset and/or subsets thereof may comprise the application program dataset. The operating system dataset and/or application program dataset may be configured to read, write, delete, manage and/or administer any kind of data object stored on the secure element and such are the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The user profile datasets can contain diversified data. Such diversified data can be any data relating to a human entity, machine entity, or alike, allowing for an unequivocal identification of that entity. Since such diversified data can be highly sensitive and therefore require an appropriate level of data protection, The diversified data can contain at least one security credential. Such security credentials may enable to access, encrypt user profile datasets and/or data components thereof. The security credentials may have a security level that does not allow them to be accessed, such as read, displayed, copied, transferred, or alike, by any unauthorized party, such as noncertified party, or alike. By contrast, there should be only accessible by certified parties, such as trusted entities. The diversified data can comprise any kind of identifiers, security keys and/or authentication certificate.

Profile identifiers can be ICCIDs. Element identifiers can be EIDs. Selection instructions can be formulated in the profile selection dataset. Thereby, single user profile datasets can be selected as desired or required based on the secure element at hand. A hardware security module for a server device can be provided to operate the profile identifier database.

In contrast to that, profile provision according to the prior art, such as for in-factory profile provisioning (IFPP), as known from the prior art, commonly rely on the acquisition of bound profile packages (BPP) designated for certain secure elements in the form of batch jobs involving the so-called batch of user profile datasets or respective BPPs to be administered as a whole. For example, such an In-Factory Profile Provisioning as defined by the GSMA Remote SIM Provisioning (RSP) architecture, where an SM-DP+ server, referred to as SM-DPf in the factory context, prepares and delivers profile packages to devices during manufacturing. Current implementations require explicit requests for BPP acquisition, necessitating additional steps in the manufacturing process.

The proposed solution allows for automating the acquisition of BPPs in an In-Factory Profile Provisioning (IFPP) environment. The solution introduces an automated mechanism to acquire BPPs upon eUICC data import, streamlining the factory provisioning process and eliminating the need for separate batch acquisition steps. Alternative automatic data flows for BPP acquisition in IFPP scenarios are enabled. Implementing the profile identifier selection functionality to be possibly utilized upon an eUICC import allows for starting data acquisition immediately after the eUICC import, and without a batch acquisition request aby a factory, or alike. This enables a flexible personalization and provision of secure elements. Thus, the secure elements do not require to be provided with any of the diversified data before leaving the factory and can be reconfigured with diversified data at a later point of time, for example, by a manufacturer of user devices, by an MNO, or alike.

The proposed solution is compatible with previously known data provisioning processes, such as defined by the GSMA, which commonly restricts some data provisioning to certain environments. For example, a batch of secure elements can be provided with the diversification program dataset at a production facility, then be provided to a manufacturing facility where an OS and diversified data can be provided to the secure element by means of the security program dataset and corresponding diversification program dataset, while leaving an option of accumulating stock and provision other, less restricted, sets of data, e.g., for some IoT devices, at later production stages, such as for just-in-time delivery. It is even conceivable to provide blank and semi-blank secure elements in order to maximize flexibly and enable a decentralized distribution of the secure elements and/or respective user devices.

The proposed solution has the advantage over the prior art, that separate batch acquisition steps can be eliminated, which results in a streamlined process with reduced complexity on the factory side. Time delays between import and acquisition of data relating to the provisioning of user profile datasets can be reduced, resulting in faster delivery of the user profile datasets. In particular, factory related systems do not no longer need to keep track of un-provisioned secure elements, for example, by manually delivering element identifiers to a factory in via a separate dedicated interface. In order for the automatic acquisition upon import to work, a server device, such as an SMDPf, can be enabled to understand which profile identifier is to be used for each element identifier imported.

Consequently, secure elements and HSM can be delivered to any manufacturing facility, including OEM/ODM vendor facilities, and fabrication facilities of the secure element, regardless of a change to standards and/or specifications relating to the user device between the delivery and a later point of the time of deployment of user devices and/or the secure elements to customers. Secure elements, their OS and/or diversified data can be handled in a way that a future-proof functional spectrum, safety and security may be assured, while not compromising their deployability and availability. User profile datasets can be provided to secure elements in a way, that on the one hand, their personalization can be carried out at remote premises or by third parties, for example, for IFPP, while on the other hand, a required level of control by trusted entities and/or standardization bodies over the personalization process is maintained.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment, the at least one selection instruction comprises a random value for randomly selecting the profile identifier. In such a random use case, e.g., a factory can confiture configures a list of default profile identifiers. Each item in the list can be a data object, such as a string representing a profile identifier. Upon import, each element identifier can be provisioned with a random profile identifier from the list. This further helps in providing a flexible way for profile provisioning just-in-time.

According to an embodiment, the at least one selection instruction comprises a weight value for selecting the profile identifier based on information regarding the element identifier to be weighted according to the weight value. In such a percentage use case, for example, a factory can configure a list of default profile identifiers. Each item in the list can be a data object in the form of a Tuple of a string representing a profile identifier and a corresponding weight representing the possibility of an element identifier to use this profile identifier compared to the weights of the other defined profile identifiers. Upon import, each element identifier can be used to select a profile identifier from the default profile identifier list randomly, but with odds according to the defined weights. This can help to provide a flexible, yet controllable way, to assign profile identifiers to element identifiers.

According to an embodiment, the at least one selection instruction comprises a selection rule for selecting the profile identifier based on information regarding the element identifier to be considered according to the rule value. In such a rules-based profile identifier selection use case, for example, a factory can configure the list of default profile identifiers. Each item in the list can be a data object in the form of a Tuple of a string representing a profile identifier and a corresponding list of "rules" representing when this profile identifier would be selected. The rules shall be information tied to the element identifiers in the secure element data import, such as an eUICC data import (customerId, platformType, platformVersion, eumId, etc.). Upon import, if an element identifier is imported with the same information configured in one the rules of one of the default profile identifiers, that very profile identifier shall be used for the provisioning. This can further help to provide a flexible, yet controllable way, to assign profile identifiers to element identifiers.

According to an embodiment, the at least one selection instruction comprises a profile request for identifying the profile identifier to be selected. In such a use case involving profile identifier selection upon import, a respective import request can include a profit identifier, that has been somehow (out of scope) communicated from the factory. Upon import, the respective phone coming in the import request can be used to provision the user profile data set to the secure element he corresponding to the element identifier. Further help in providing a flexible way to provide user profile datasets upon individual request.

According to an embodiment, the profile identifier database contains data objects comprising the profile identifiers and the selection instructions. Any of the data objects can comprise random values, weight values, and/or profile requests as desired or required for performing the profile identifier selection based on element identifiers. This further helps in providing flexible, yet reliable way for provisioning user for the datasets to secure elements.

According to an embodiment, an element identifier is assignable to at least two profile identifiers. The course of the selection process, one of the at least two profile identifiers can be selected. This further helps in enhancing flexibility and reliability when provisioning user profile datasets to secure elements.

According to an embodiment, the profile identifiers and/or the profile identifier database are being received from the trusted entity. The trusted entity can prepare the profile identifiers and/or the profile identifier database in a manner that they can be used in a factory environment. This facilitates concealing any sensitive data, such as the diversified data, and further helps in preventing unauthorized access to the data.

According to an embodiment, the method further comprises the step of compiling a data batch or package to be installed in a secure element based on the fetched element identifier and/ or selected profile identifier, wherein the data batch comprises application program datasets, operating system datasets and/or the user profile dataset. The user profile datasets can comprise application program datasets, operating system datasets and/or user profile datasets. The HSM and/or the server device can thereby be enabled to manage application program datasets, operating system datasets, and/or user profile datasets for secure elements of user devices. Thereby, in particular IFPP is further facilitated while maintaining required data protection levels. This further helps in providing user profile datasets to secure elements in a way, that on the one hand, their personalization can be carried out at remote premises or by third parties, while on the other hand, a required level of control by trusted entities and/or standardization bodies over the personalization process is maintained, in particular, in that the selection of data to be provided to secure elements can be carried out according to a respective security level.

According to an embodiment, a fallback profile identifier is provided for the event that the selected profile identifier cannot be used. The fallback profile identifier can be provided as 1 of the at least two profile identifiers that can be associated to an element identifier. This can additionally help in enhancing flexibility and reliability when provisioning user profile datasets to secure elements.

### Brief Description of the Drawings

- Fig. 1: is a schematic illustration of an embodiment of a computing device as a part of a configuration system with a hardware security module configured for providing data objects for secure elements of user devices.
- Fig. 2: is a schematic illustration of an embodiment of a configuration system for configuring user devices.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

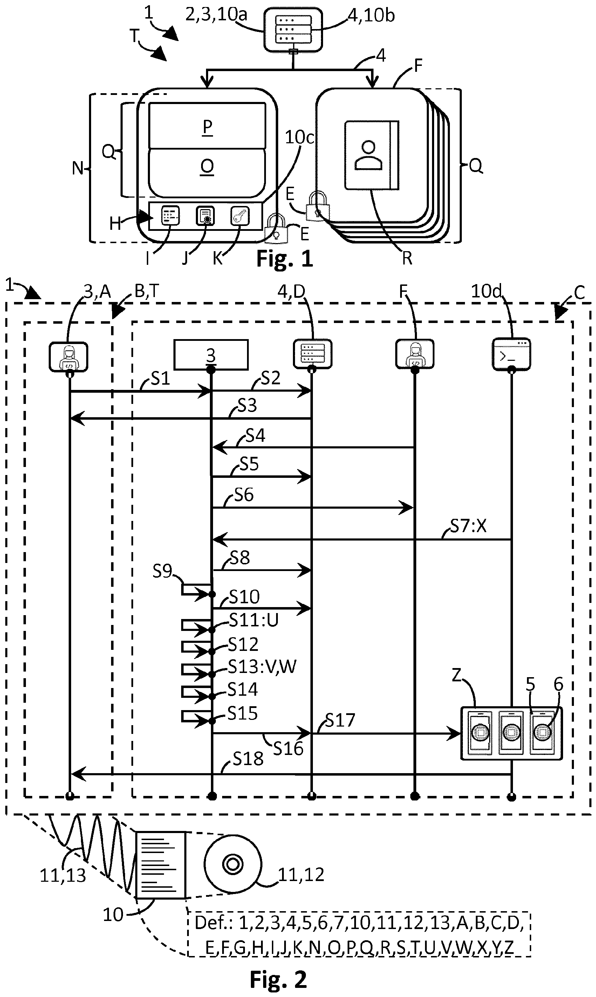

Fig. 1 shows a schematic illustration of a configuration system 1 comprising a computer device 2, for instance a server device 3, comprising a hardware security module 4 and data transmission lines (not shown) adapted to manage and transfer, respectively, data for configuring user devices 5 (see Fig. 2), for example, in the form of a personal mobile device, such as a smart phone, smartwatch, etc., to be associated with a personal entity, and/or in the form of an Internet of Things (IoT) device, such as a multimedia device, camera, speaker, household appliance, vehicle, vending machine, or alike, to be associated with a machine entity, respectively. In the present example, the user devices 5 may be adapted for communication via a telecommunication network (not shown) by means of at least one user profile dataset P to be saved in a respective secure element 6, such as an UICC, eUICC, iUICC, SIM, eSIM, iSIM, SE, eSE, or alike, provided in the form of a computer chip (see Fig. 2).

The user profile data sets P are generated based on respective personal records R and/or administrative data, for example, in the form of data files, on the computer device 2, in particular, the hardware security module 4 thereof. The personal records R can be viewed as diversified data Q. The administrative data can be viewed as static and/or system data, such as certain data structures, possibly including security credentials H or serving to administer, create and/or handle security credentials H. Each user profile dataset P may contain at least a part of a respective personal record R. The user profile dataset P has to be stored on the secure element 6. For storing and managing user profile data sets P on the secure elements 6, and operating system dataset O has to be installed on the secure elements 6. The security credentials H, user profile dataset P and the operating system dataset O can each constitute a data object and/or can in combination be viewed as a data object, package and/or component N.

A configuration program 10 (see Fig. 2) can be provided in the form of a computer program which may comprise respective program modules and may be distributed and/or combined in a manner that it allows operation in such a configuration of the configuration system 1 and its components. The configuration program 10 can comprise a server program dataset 10a, a security program dataset 10b and/or an installation program dataset 10c. The server program dataset 10a can comprise computer-readable instructions for operating and/or configuring the server device 3. The security program dataset 10b can comprise computer-readable instructions for operating and/or configuring the hardware security module 4, for instance, in conjunction with the server device 3.

The installation program dataset 10c can be provided for installing any of the data objects or data components N, for example, in the form of packages including the user profile dataset on the secure element 6. The installation program dataset 10c can comprise a basic operating system for the secure elements 6. The basic operating system can be regarded as a mini operating system, boot loader, or alike, helping to install the or data components N on the secure elements 6, for example, in providing a basic framework and/or functions which allow to address a storage area 7 of the secure elements 6 (see Fig. 2).

Additionally, the installation program dataset 10c can comprise the security credentials H, such as profile identifiers I, authentication certificates J, and/or security keys K. The security credentials H may comprise any kind of credentials defined by e.g., the GSMA, or alike. The security keys K may comprise any kind of cryptographic code or key element which may be adapted to interact with the user devices 5, the secure elements 6, to verify and/or authenticate an issuer of any part of the data objects and/or data components N. The authentication certificates J may be any kind of electronic certificate, for example, that can be issued by the trusted entity T, for authenticating an origin of the devices 5, the secure elements 6, the installation program dataset 10c and/or the data components N. Any of these data can may be protected against unauthorized access by respective encryption measures E. The transmission lines handling and/or transferring the data may comprise any kind of wired and/or wireless transmission chains, including the Internet (for transmissions "Over-The-Air") as well as other physical and/or non-physical data carriers, which can be configured and secured as desired and required. A trusted entity T may administer, define, generate and/or provide any of the data, such as security credentials H, data components N, user profile datasets P, diversified data Q, server program datasets 10a, security program dataset 10b and/or installation program dataset 10c.

Fig. 2 shows a schematic illustration of an embodiment of a configuration system 1 for configuring the user devices 5, in particular, for personalizing the secure elements 6 thereof. A respective method for configuring the user devices 5 and/or secure elements 6 may have several steps S which may be carried out by and/or with the help of the configuration program 10 and its respective components. In the present example, the configuration system 1 and respective method involve a data administration tool A which can serve as a data responsible located at a data facility B serving as the trusted entity T, and a fabrication or manufacturing facility C, such as a factory, manufacturing the user devices 5.

The administration tool A, the data facility B and/or the manufacturing facility C may be combined separately of each other, in conjunction and/or respective premises as desired or required. Each may have, be provided with, and/or may have access to a server device 3 and a respective hardware security module 4. A factory administration tool F can serve as a factory responsible for data administration on the side of the manufacturing facility C. A profile identifier database D is provided at the manufacturing facility C, for example, hosted in a respective security module 4, for handling the profile identifiers I. The profile identifier database D can be provided as a database of the respective server device 3, in particular, an SMDPf which can be as understood as an SM-DP+ which is provided with an additional SM-DP gateway, such as a - Bound Profile Package Aggregator (BPPA).

Furthermore, an importation program dataset 10d can be provided for handling data exchanges between server devices 3 and secure elements 6, in particular, with the installation program dataset 10c provided for the secure elements. The importation program dataset 10d can be provided in the form of a Trusted Image Loader or other data generation tool (IDSP) like an image wrapper for loading information into the server device 3, for example, in the form of an SMDPf, at the fabrication facility. The Importation program dataset 10d can generates both, data for the server device 3 and data for the user device 5 which are deployed into the server device 3, such as user profile datasets P and/or data relating to the secure elements 6, e.g. eUICC data, including element identifiers X (e.g., eID, etc.) that serve for unequivocally identifying a secure element 6.

In a first step S1, the data administration tool A can send an update of profile identifiers I available to the server device 3 and the manufacturing facility C. In a second step S3, the server device 3 can update the database D to include the profile identifiers I. In a third step S3, the server device 3 and/or hardware security module 4 can inform the data administration tool A of a success of importing their profile identifiers I. Alternatively, or additionally, in a fourth step S4, the factory administration tool F can update the profile identifiers I available in the server device 3, which then in the respective fifth step S5 can update the database D to include the profile identifiers I. In a sixth step S6, the server device 3 and/or hardware security module 4 can inform the factory administration tool F of a success of importing their profile identifiers I

In a seventh step S7, element identifiers X are being fetched. For example, the importation program dataset 10d imports the element identifiers X from any number of secure elements 6 and/or user devices 5 provided with the secure elements 6, for instance, through the installation program dataset 10c. In an eighth step S8, the element identifiers X, possibly along with any other data from and/or regarding the secure elements 6 can be provided to the database D. In a ninth step S9, it can be checked, whether potential profile identifiers I to be associated to the fetched element identifiers X are at hand in the database D. In a tenth step S10, the profile identifiers I previously provided to the database D can be retrieved therefrom, if they are at hand.

In an eleventh step S11, at least one selection rule U may be applied to calculate potential profile identifiers I to be associated to the fetched element identifiers X. In a twelfth step S12, the calculated profile identifiers I can be provided. Alternatively, or additionally, in a thirteenth step S13, a random value V and/or weight value W may be applied to select profile identifiers I. In a fourteenth step S14, the selected profile identifiers I may be provided. In a fifteenth step S15, the database D may be updated according to the selection.

In a sixteenth step S16, the data components N, in particular user profile datasets P and/or operating system datasets O, may be prepared. In a seventeenth step S17, at the manufacturing facility C, for example, in a manufacturing stage Z, the user devices 5 provided with the secure elements 6, for example, in the form of an UICC, eUICC, iUICC, SIM, eSIM, iSIM, SE, or eSE, can be provisioned with the data components N, for instance, through the importation program dataset 10d. For example, and a synchronous batch acquisition job be used for providing the data components N is a batch. In an eighteenth step S18, a successful provisioning of the data components N can be reported back from the factory administration tool F and/or the importation program dataset 10d to the data administration tool A.

According to the present example, any of the calculation and/or selection measures for determining profile identifiers I to be used can be combined with each other as required or desired. In such an all-in use case, a list of default profile identifiers I can be configured by the manufacturing facility C and kept in the database D, for example, in form of a list of respective data objects. Each object can consist of a profile identifier I along with a set of selection rules U, random values V and/or weight values W, for example, represented as float variables. Then, upon import, if an element identifier X belongs to one or more profile identifiers I in the configured list of default profile identifiers I, a list of potential profile identifiers I can be fetched, among which one profile identifier I can be selected according the weight values W of the profile identifiers I in the list of potential profile identifiers I

For example, if a profile identified I has a weight value W of 0, it will never be considered unless it is the only one making it to the list of potential profile and if I is I (or, all of them are of weight 0). In that case, weight value W of 0 will be handled as if it was weight 1. If an element identifier X belongs to no profile identifiers I in the configured list of default profile identifiers I, that element identifier X will not be auto-provisioned, and will wait for a batch acquisition request from the factory with a specific profile identifier I. If all element identifiers X are to be auto-provisioned, one ore more fallback profile identifiers I can be added by specifying selection rules U that allow all element identifiers X (all rules are ANY), and a weight value W of 0 (so it is only considered as a fallback). If an element identifier x is imported with a specific profile identifier I in an import request, that profile identifier I will be chosen, regardless of what is configured in the default list of profile identifiers I. Such a list of default profile identifiers can have the following form:

| **profileldentifier** | **customerid (not null, default ANY)** | **platformType (not null, default ANY)** | **platformVersion (not null, default ANY)** | **eumid (not null, default ANY)** | **other (not null, default ANY)** | **weights (not null, default 1)** |
|---|---|---|---|---|---|---|
| profileIdentifier0 | ANY | ANY | ANY | ANY | ANY | 0 |
| profileIdentifier1 | ANY | ANY | ANY | ANY | ANY | 0 |
| profileIdentifier2 | customerId1 | platformType1 | platformVersion1 | eumId1 | ANY | 1 |
| profileIdentifier1 | customerId1 | platformType1 | platformVersion1 | sumId1 | ANY | 2 |
| profileIdentifier3 | customerId2 | platformType2 | platformVersion2 | eumId2 | ANY | 1 |
| profileIdentifier4 | customerId2 | ANY | ANY | ANY | ANY | 1 |
| profileIdentifier5 | customerId2 | ANY | ANY | eumId2 | ANY | 0.5 |
| profileIdentifier6 | customerId2 | ANY | platformVersion3 | ANY | ANY | 3 |
| profileIdentifier7 | customerId3 | platformType3 | platformVersion3 | eumId3 | ANY | 2 |

The following scenarios for selecting profile identifiers I based on respective element identifiers X in the form of imported Eid's as example applications:
- EidImport(customerId=customerId1, platformType=platformType1, platformVersion=platformVersion1, eumId=eumId1) potentialProfileIdentifiers = [(profileIdentifier2, weight=1), (profileIdentifier1, weight=2)] Select one of them with the following odds (profileIdentifier1=2/3, profileIdentifier2=1/3)
- EidImport(customerId=customerId2, platformType=platformType2, platformVersion=platformVersion2, eumId=eumId2) potentialProfileIdentifiers = [(profileIdentifier3, weight=1), (profileIdentifier4, weight=1), (profileIdentifier5, weight=0.5)] Select one of them with the following odds (profileIdentifier3=1/2.5, profileIdentifier4=1/2.5, profileIdentifier5=0.5/2.5)
- EidImport(customerId=customerId3, platformType=platformType3, platformVersion=platformVersion3, eumId=eumId3) potentialProfileIdentifiers = [(profileIdentifier7, weight=2)] Select profileIdentifier7
- EidImport(customerId=customerId2, platformType=platformType3, platformVersion=platformVersion3, eumId=eumId3) potentialProfileIdentifiers = [(profileIdentifier4, weight=1), (profileIdentifier6, weight=3)] Select one of them with the following odds (profileIdentifier4=1/4, profileIdentifier6=3/4)
- EidImport(customerId=customerId4, platformType=platformType4, platformVersion=platformVersion4, eumId=eumId4) potentialProfileIdentifiers = [(profileIdentifier0, weight=1), (profileIdentifier1, weight=1)] Select one of them with the following odds (profileIdentifier0=1/2, profileIdentifier1=1/2)
- EidImport(customerId=customerId1, platformType=platformType1, platformVersion=platformVersion1, eumId=eumId1, profileIdentifier=profileIdentifier8) Select profileIdentifier8

According to the present exemplary embodiments, the installation program dataset 10c, such as an OFL component, can be individualized and/or shared amongst several possibly different operating system datasets O and may be the only component that is never updated once installed in the respective secure element 6. Individual and/or identical data objects and/or data components N, for example, provided as respective data images, can be used for the secure elements 6. The secure elements 6 can be personalized by means of the installation program dataset 10c at the fabrication and/or manufacturing facility C.

In any of the embodiments of the configuration system 1 as described herein, in particular the computing device 2, the server device 3, and/or the hardware security module 4 can be configured to execute the configuration program 10 and its components, such as the server program dataset 10a, security program dataset 10b, installation program dataset 10c and/or importation program dataset 10d. A computer-readable data carrier 11 can have stored thereon the at least of said components of the configuration program 10 and may take the form of a computer-readable medium 12 and/or data carrier signal 13. When carrying out the configuration program 10, the configuration system 1 and any components thereof communicate as specified in the configuration program 10. Parameters associated with and/or underlying the configuration system 1, any of the components thereof and/or any of the steps S carried out thereby, can be defined in and/or by the configuration program 10.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: configuration system
- 2: computing device
- 3: server device
- 4: hardware security module / safe storage
- 5: user device
- 6: secure element
- 7: storage area / non-volatile memory

- 10: configuration / computer program
- 10a: server program dataset
- 10b: security program dataset
- 10c: installation program dataset
- 10d: importation program dataset
- 11: computer-readable data carrier
- 12: computer-readable medium
- 13: data carrier signal

- A: data administration tool / data responsible
- B: data facility / data provider
- C: fabrication facility / chip vendor factory / manufacturing facility / OEM and / or ODM factory
- D: data base
- E: encryption measures
- F: factory administration tool / factory responsible
- G: administrative / static / system data
- H: security credentials
- I: profile identifier
- J: authentication certificate
- K: security key
- N: data component / package
- O: operation system dataset
- P: user profile dataset / subscriber profile
- Q: diversified data
- R: personalization data / record
- S: step
- T: trusted entity
- U: selection rule
- V: random value
- W: weight value
- X: element identifier
- Y: profile request
- Z: manufacturing stage

- S1: send profile identifiers
- S2: update database
- S3: confirm import
- S4: update profile identifiers
- S5: update database
- S6: confirm import
- S7: fetch element identifiers
- S8: provide element identifiers to database
- S9: check element identifiers
- S10: retrieve profile identifiers
- S11: apply selection rule
- S12: provide calculated profile identifiers
- S13: apply random value and/or weight value
- S14: provide selected profile identifiers
- S15: update database
- S16: prepare data components
- S17: provision secure elements
- S18: confirm success

## Claims

1. Method of providing user profile datasets (P) for configuring secure elements (6), such as eUICCs, of user devices (5) intended to be issued to users (U) and allowing secure accesses involving a trusted entity (T), in particular for accessing telecommunication networks, the method comprising the steps of
providing a set of secure elements (6) each having an element identifier (D),
configuring a profile identifier database (D) containing potential profile identifiers (I) each identifying a user profile dataset (P) to be associated with a user; and
fetching an element identifier (X) of a secure element (6) for configuration, and
selecting a profile identifier (I) from the profile identifier database (D) to be associated with the element identifier (X) based on at least one selection instruction taken from the profile identifier database (D).

2. Method according to claim 1, wherein the at least one selection instruction comprises a random value (V) for randomly selecting the profile identifier (I).

3. Method according to claim 1 or 2, wherein the at least one selection instruction comprises a weight value (W) for selecting the profile identifier (I) based on information regarding the element identifier (X) to be weighted according to the weight value (W).

4. Method according to at least one of claims 1 to 3, wherein the at least one selection instruction comprises a selection rule (U) for selecting the profile identifier (I) based on information regarding the element identifier (X) to be considered according to the selection rule (U).

5. Method according to at least one of claims 1 to 4, wherein the at least one selection instruction comprises a profile request for identifying the profile identifier (I) to be selected.

6. Method according to at least one of claims 1 to 5, wherein the profile identifier database (D) contains data objects comprising the profile identifiers (I) and the selection instructions.

7. Method according to at least one of claims 1 to 6, wherein an element identifier (X) is assignable to at least two profile identifiers (I).

8. Method according to at least one of claims 1 to 7, wherein the profile identifiers (I) and/or the profile identifier database (D) are being received from the trusted entity (T).

9. Method according to at least one of claims 1 to 8, further comprising the step of compiling a data batch to be installed in a secure element (6) based on the fetched element identifier (X) and/ or selected profile identifier (I), wherein the data batch comprises an application program datasets, an operating system datasets (O) and/or the user profile dataset (P).

10. Method according to at least one of claims 1 to 9, wherein a fallback profile identifier (I) is provided for the event that the selected profile identifier (I) cannot be used.

11. Configuration program (10) for configuring secure elements (6) of user devices (5), in particular for secure operation involving a trusted entity (T), wherein the configuration program (10) comprises instructions which, when the configuration program (10) is executed by a server device (3), cause the server device (3) to carry out a method according to at least one of claims 1 to 10.

12. Security program dataset (10c) for a hardware security module (4) of a server device (3), in particular a security server providing a secure location for allowing secure operations involving a trusted entity (T), comprising a at least parts of a configuration program (10) according to claim 11 and/or configured to carry out method according to at least one of claims 1 to 10.

13. Computer-readable data carrier (11, 12, 13) having stored thereon a configuration program (10) according to claim 11 and/or a security program dataset (10c) according to claim 12.

14. Hardware security module (4) for a server device (3), in particular a security server providing a secure location for allowing secure operations involving a trusted entity (T), wherein the hardware security module (4) is configured to carry out a method according to at least one of claims 1 to 10, comprises a configuration program (10) according to claim 11, a security program dataset (10c) according to claim 12 and/or a computer-readable data carrier (11, 12, 13) according to claim 13.

15. Server device (4), such as a security server providing a secure location, in particular for allowing secure operations involving a trusted entity (T), wherein the server device (4) is configured to carry out a method according to at least one of claims 1 to 10, comprises a configuration program (10) according to claim 11, a security program dataset (10c) according to claim 12, computer-readable data carrier (11, 12, 13) according to claim 13, and/or a hardware security module (4) according to claim 14.
